# EUROPEAN PATENT APPLICATION

(11) **EP 0 808 764 A2**
(43) Date of publication of application: **26.11.1997**
(21) Application number: 97303418.4
(22) Date of filing: 20.05.1997
(51) Int. Cl.: B62D 23/00

(54) **Vehicle frame assembly and method for manufacturing same**

(30) Priority: 24.05.1996 US 653545
(71) Applicant: DANA CORPORATION, Toledo, OH 43615 (US)
(72) Inventor: Marando, Richard A., Bernville, Pennsylvania 19506 (US)
(74) Representative: Giles, Ashley Simon

(57) **Abstract**

A structure for a vehicle frame assembly (10) and method of manufacturing same are disclosed. The vehicle frame assembly (10) includes a plurality of structural members (20) having hollow ends which are connected together at joints by a plurality of joint nodes (30). Each of the joint nodes (30) includes a body (31) having two or more projections (32) extending therefrom. To join a structural member (20) to a joint node (30), the hollow end of the structural member (20) is initially disposed about the projection (32) of the joint node (30). The cross sectional shape of the projection (32) is preferably similar to, but somewhat larger than, the cross sectional shape of the hollow end of the structural member (20). Thus, the end portion of the structural member (20) is deformed somewhat when it is moved over the projection (32) to establish a press fit relationship therebetween. Following this initial installation, the structural member (20) and the projection (32) are then permanently joined together by welding. Because of the heat generated during the generation of the weld, a heat affected zone is created in the structural member (20). The heat affected zone immediately surrounds the weld and extends a relatively short distance along the length of the structural member (20). The projection (32) of the joint node (30) extends through and beyond the heat affected zone of the structural member (20) so as to provide internal mechanical support to the weakened region of the structural member (20). Thus, although the structural member (20) itself is weakened in the heat affected zone by the formation of the weld, the overall strength of the combined structural member and joint node assembly is not reduced.

## Description

### BACKGROUND OF THE INVENTION

This invention relates in general to frame assemblies for vehicles and in particular to an joint structure for such a vehicle frame assembly and method of manufacturing same.

Virtually all land vehicles in common use, such as automobiles and trucks, include a frame which serves as a platform upon which the remainder of the vehicle is built. Many vehicle frame structures are known in the art. Most of these known vehicle frame structures are formed from a number of individual metallic components which are permanently joined together. For example, a typical vehicle flat bed frame assembly is composed of a pair of longitudinally extending side rails which are joined together by a plurality of transversely extending cross members. In shorter length vehicles, the side rails can be formed from a single piece of metal. In longer vehicles, however, each of the side rails is usually formed from two or more side rail sections which are permanently joined together. In either event, the side rails and cross members, once joined together, form a frame for supporting the remaining portions of the vehicle thereon. A typical vehicle space frame assembly includes not only the components described above, but further includes an additional number of individual metallic components which define an enclosed space for occupants.

Conventional welding techniques have been commonly used to permanently join the various components of the vehicle frame assembly together. As is well known, conventional welding techniques involve the application of heat to localized areas of two metallic members to be joined, which results in a coalescence of the materials thereof. Such welding may or may not be performed with the application of pressure, and may or may not include the use of a filler metal. Although conventional welding techniques have functioned satisfactorily in the past with conventional materials used to form the vehicle frame components, such as steel, there are some drawbacks to the use thereof in joining such vehicle frame components together. Primarily, as noted above, conventional welding techniques involve the application of heat to localized areas of the two metallic frame members. This application of heat can cause undesirable weaknesses to be introduced into the metallic components. More specifically, it has been found that the heat used during the welding process can adversely affect the structural properties of the metallic members in the regions thereof which immediately surround the actual weld. These regions, which are referred to as the heat affected zones, are somewhat weaker than the remaining areas of the metallic members. Thus, much like the strength of a chain is limited by its weakest link, the strength of a pair of welded vehicle frame components is limited to the strength of the heat affected zone which surrounds the weld.

Although heat affected zones are present in all welded metallic components, it has been found that the resultant weaknesses generated thereby are particularly troublesome when attempting to weld metallic vehicle frame components which are manufactured from aluminum or aluminum alloys. Aluminum is a desirable material for use in vehicle frame assemblies because it is relatively light in weight, yet strong enough to handle the loads imposed thereon during normal use. Thus, it would be desirable to produce a vehicle frame assembly which is composed exclusively of aluminum frame components. Unfortunately, aluminum is also a good thermal conductor of heat and has a relatively low melting temperature. Consequently, the weaknesses generated in the heat affected zones of welding aluminum frame components are more troublesome than when welding frame components formed from conventional materials, such as steel, which are poorer thermal conductors of heat and which have relatively higher melting temperatures.

To address this problem, the physical sizes of the aluminum frame components could be increased in the region of the welds. In this manner, the weaknesses generated in the heat affected zones would not reduce the overall strength of the vehicle frame assembly below the levels required for normal use. Unfortunately, because aluminum frame components are typically manufactured in lengths of uniform shapes and thicknesses for the sake of economy, this would result in an increase in the physical sizes of the aluminum frame components throughout their entire lengths. This would add undesirable weight and expense to the vehicle frame assembly, inasmuch as the physical sizes of the aluminum frame components would be unduly large everywhere except at the heat affected zones. In essence, the aluminum frame members would be over-designed in all locations except for the heat affected zones surrounding the welds. Because the production of vehicle frame assemblies is usually a high volume, low margin process, it would be desirable to provide an improved structure for a vehicle frame assembly, and method of manufacturing same, which avoids the drawbacks of conventional welding techniques and addresses the weight and expense issues discussed above.

### SUMMARY OF THE INVENTION

This invention relates to an improved structure for a vehicle frame assembly and method of manufacturing same. The vehicle frame assembly includes a plurality of structural members having hollow ends which are connected together at joints by a plurality of joint nodes. Each of the joint nodes includes a body having two or more projections extending therefrom. To join a structural member to a joint node, the hollow end of the structural member is initially disposed about the projection of the joint node. The cross sectional shape of the projection is preferably similar to, but somewhat larger than, the cross sectional shape of the hollow end of the structural member. Thus, the end portion of the structural member is deformed somewhat when it is moved over the projection to establish a press fit relationship therebetween. Following this initial installation, the structural member and the projection are then permanently joined together by welding. Because of the heat generated during the generation of the weld, a heat affected zone is created in the structural member. The heat affected zone immediately surrounds the weld and extends a relatively short distance along the length of the structural member. The projection of the joint node extends through and beyond the heat affected zone of the structural member so as to provide internal mechanical support to the weakened region of the structural member. Thus, although the structural member itself is weakened in the heat affected zone by the formation of the weld, the overall strength of the combined structural member and joint node assembly is not reduced. Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a perspective view of a vehicle frame assembly in accordance with this invention, including a plurality of structural members which are joined together at joints by a plurality of joint nodes.

Fig. 2 is an exploded perspective view of one of the joints of the vehicle frame assembly illustrated in Fig. 1, the illustrated joint including one joint node and two structural members.

Fig. 3 is a sectional elevational view of an end of one of the structural members illustrated in Fig. 2 which identifies certain dimensional relationships.

Fig. 4 is a sectional elevational view of an end of the joint node illustrated in Fig. 2 which identifies certain dimensional relationships.

Fig. 5 is an enlarged and somewhat exaggerated sectional elevational view of the joint illustrated in Fig. 2 shown assembled.

### DETAILED DESCRIPTION OF THE PREFERRED EMBODIMENT

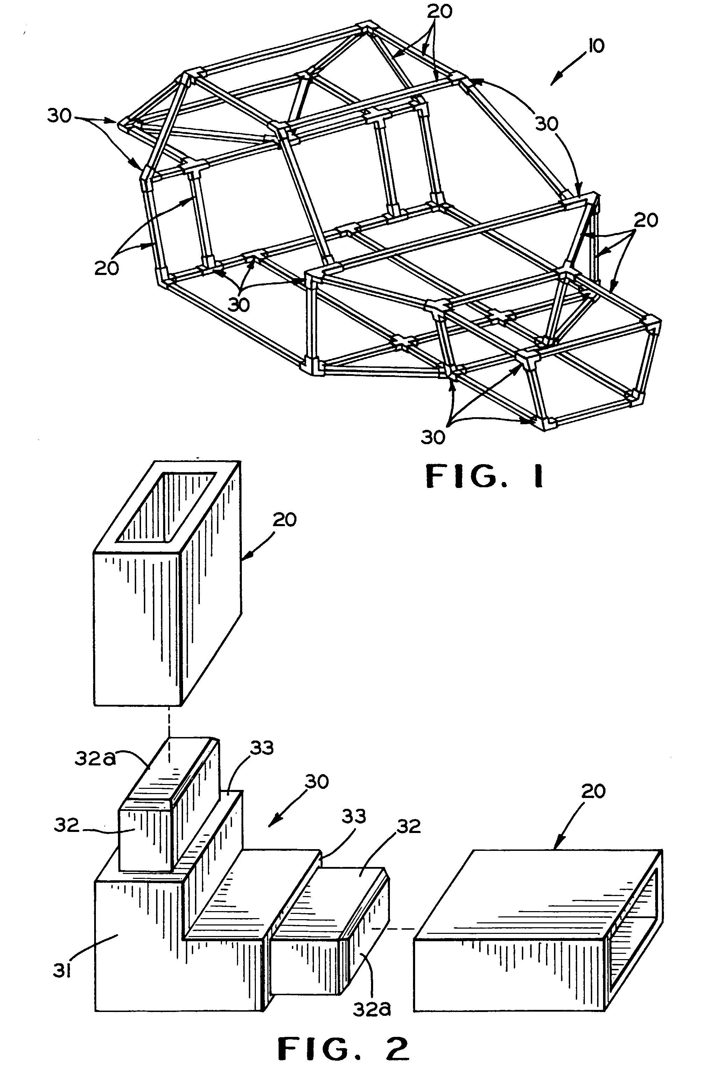

Referring now to the drawings, there is illustrated in Fig. 1 a vehicle frame assembly, indicated generally at 10, in accordance with this invention. The illustrated vehicle frame assembly 10 is an automobile space frame, i.e., a frame for an automobile which defines an enclosed space for occupants. However, as will become apparent from the following discussion, this invention may be utilized in a flat bed frame or any other frame structure for any type of vehicle.

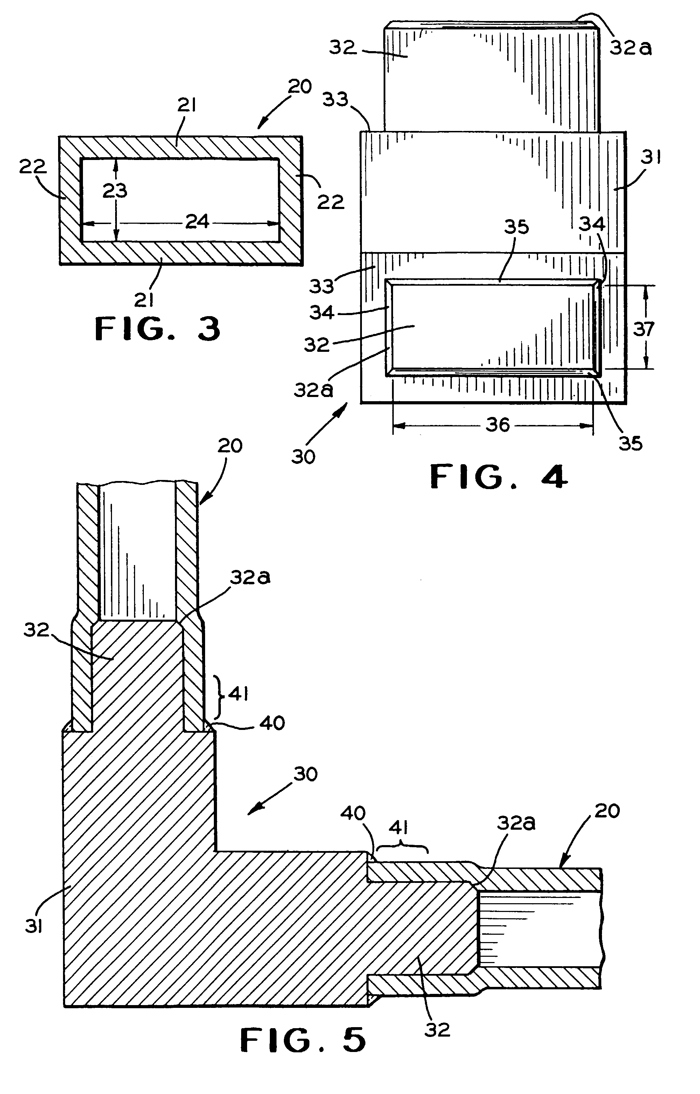

The illustrated vehicle frame assembly 10 includes a plurality of individual structural members, indicated generally at 20. The structure of the structural members 20 is illustrated more clearly in Figs. 2 and 3. As shown therein, the structural members 20 are linear and are formed having cross sectional shapes which are uniform throughout the lengths thereof. However, it will be appreciated that some or all the structural members 20 may be non-linear and may be formed having varying cross sectional shapes. The structural members 20 are preferably formed from aluminum or an aluminum alloy, but other metallic materials may be used if desired. Preferably, the structural members 20 are formed from elongated sections of stock material which are cut to desired lengths to form the vehicle frame assembly.

As best shown in Fig. 3, the illustrated structural member 20 is formed having a hollow rectangular cross sectional shape which is defined by a first pair of opposed sides 21 and a second pair of opposed sides 22. One or more interior dimensions are defined by hollow structural member 20. In the illustrated embodiment, the first pair of opposed sides 21 define a first interior dimension 23, while the second pair of opposed sides 22 define a second interior dimension 24. It will be appreciated, however, that the structural member 20 may be formed having other cross sectional shapes as desired. For example, the structural member 20 may be formed as a tube having a circular cross sectional shape defining a single interior dimension (i.e., the inside diameter of the tube). Furthermore, as will become apparent below, the end portion of the structural member 20 (i.e., that portion of the structural member 20 which is involved in the formation of a joint in the vehicle frame assembly 10) may be formed having a cross sectional shape which is different from the remainder of the structural member 20.

The illustrated vehicle frame assembly 10 further includes a plurality of individual joint nodes, indicated generally at 30. The structure of the joint nodes 30 is illustrated more clearly in Figs. 2 and 4. As shown therein, each of the joint nodes 30 includes a body 31 having two or more projections 32 extending therefrom. The outer ends of the projections 32 may be tapered slightly, as shown at 32a. A shoulder 33 is defined at the junction of the body 31 with each of the projections 32. As will be explained in detail below, the projections 32 represent the portions of the joint nodes 30 which are involved in the formation of a joint in the vehicle frame assembly 10. The illustrated body 31 is solid (although such is not necessary) and is generally L-shaped, whereby the two projections 32 extend at a right angle relative to one another. It will be appreciated, however, that the body 31 may be formed other than L-shaped, and that the projections 32 may extend at any desired angle relative to one another in order to properly form the vehicle frame assembly 10. Additionally, although the illustrated joint node 30 has two projections 32, the joint node 30 may be formed having a greater number of projections, as suggested in Fig. 1. The illustrated projections 32 are linear and are formed having cross sectional shapes which are uniform throughout the lengths thereof. However, it will be appreciated that some or all the projections 32 may be non-linear and may be formed having varying cross sectional shapes. The joint nodes 30 are preferably formed from aluminum or an aluminum alloy, but other metallic materials may be used if desired.

As best shown in Fig. 4, the illustrated projection 32 of the joint node 30 is formed having a rectangular cross sectional shape which is defined by a first pair of opposed sides 34 and a second pair of opposed sides 35. One or more exterior dimensions are defined by projection 32. In the illustrated embodiment, the first pair of opposed sides 34 define a first exterior dimension 36, while the second pair of opposed sides 35 define a second exterior dimension 37. It will be appreciated, however, that the projection 32 may be formed having other cross sectional shapes as desired. As will be explained below, however, it is desirable that the cross sectional shape of the projection 32 be similar to the cross sectional shape of the hollow end of the structural member 20 to which it is to be joined.

To join the structural member 20 to the joint node 30, an end of the structural member 20 is initially disposed about the projection 32 of the joint node 30. This is accomplished by moving the structural member 20 toward the projection 30 (or vice versa) such that the leading edge of the end of the structural member 20 engages the tapered outer end 32a of the projection 32. Further movement causes the projection 32 to be received within the structural member 20, as shown in Fig. 5. Such movement is continued until the leading edge of the end of the structural member 20 abuts the shoulder 33 defined at the junction of the body 31 and the projection 32.

As discussed above, the cross sectional shape of the projection 32 is similar to the cross sectional shape of the hollow end of the structural member 20. However, the exterior dimensions defined by the projection 32 are somewhat larger than the interior dimensions defined by the hollow end of the structural member 20. Thus, the first exterior dimension 36 defined by the projection 32 is somewhat larger than the first interior dimension 23 defined by the hollow end of the structural member 20, and the second exterior dimension 37 defined by the projection 32 is somewhat larger than the second interior dimension 24 defined by the hollow end of the structural member 20. Consequently, the end portion of the structural member 20 is deformed somewhat when it is moved over the projection 32, as shown in an exaggerated manner in Fig. 5. A press fit relationship is thus established between the structural member 20 and the projection 32, resulting in a secure mechanical connection therebetween. The tapered outer end 32a of the projection 32 is provided to facilitate the insertion of the relatively larger projection 32 within the relatively smaller hollow end of the structural member 20.

Following this initial installation, the structural member 20 and the projection 32 are then permanently joined together by welding. As shown in Fig. 5, a weld 40 is formed between the leading edge of the end of the structural member 20 and the adjacent portions of the shoulder 33 of the body 31 of the joint node 30. The weld 40 can be formed by any conventional welding apparatus and preferably extends about the entire periphery of the adjacent portions of the structural member 20 and the joint node 30. However, if desired, the weld 40 need not extend continuously or completely about the entire periphery of the adjacent portions of the structural member 20 and the joint node 30.

Because of the heat generated during the generation of the weld 40, a heat affected zone 41 is created in the structural member 20. The heat affected zone 41 immediately surrounds the weld 40, extending a relatively short distance along the length of the structural member 20. As discussed above, the heat affected zone 41 is somewhat weaker than the remaining areas of the structural member 20 and can adversely affect the structural properties thereof. It can be seen, however, that the projection 32 of the joint node 30 extends through and beyond the heat affected zone 41 of the structural member 20 so as to provide internal mechanical support to the weakened region of the structural member 20. Thus, although the structural member 20 itself is weakened in the heat affected zone 41 by the formation of the weld 40, the overall strength of the combined structural member 20 and joint node 30 assembly is not reduced.

Although this invention has been described and illustrated as including joint nodes 30 having projections 32 which extend within the ends of the hollow structural members 20, it will be appreciated that the structural members 20 may be formed having ends which extend within hollow protrusions provided on the joint nodes 30. Also, inasmuch as the projections 32 extend only a limited distance within the ends of the hollow structural members 20, it will be appreciated that the structural members 20 may be formed as solid members having only ends which are hollow. The same press fit relationship can be maintained in such alternative structures for the same reasons as described above.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A joint in a vehicle frame assembly comprising:
a hollow end provided on one of a structural member and a joint node;
a protrusion provided on the other of said structural member and said joint node, said protrusion extending within hollow end a predetermined distance; and
a weld for joining said hollow end and said protrusion together, said weld creating a heat affected zone in said hollow end which extends a distance which is less than said predetermined distance.

2. The vehicle frame joint defined in Claim 1 wherein said structural member and said joint node are formed from metallic materials.

3. The vehicle frame joint defined in Claim 2 wherein said structural member and said joint node are formed from aluminum.

4. The vehicle frame joint defined in Claim 1 wherein said hollow end is formed having a cross sectional shape which defines an interior dimension and said projection is formed having a cross sectional shape which defines an exterior dimension which is larger than said interior dimension of said projection.

5. The vehicle frame joint defined in Claim 4 wherein a press fit relationship is established between said hollow end and said projection.

6. The vehicle frame joint defined in Claim 1 wherein said hollow end defines an exterior shape and said projection defines an interior shape which are similar.

7. The vehicle frame joint defined in Claim 6 wherein said hollow end defines a rectangular exterior shape and said projection defines a rectangular interior shape.

8. The vehicle frame joint defined in Claim 7 wherein said rectangular exterior shape of said hollow end is defined by a first pair of opposed sides defining a first exterior dimension and a second pair of opposed sides defining a second exterior dimension, and wherein said rectangular interior shape of said projection is defined by a first pair of opposed sides defining a first interior dimension and a second pair of opposed sides defining a second interior dimension, said first exterior dimension being larger than said first interior dimension and said second exterior dimension being larger than said second interior dimension.

9. The vehicle frame joint defined in Claim 1 wherein said projection has a tapered end.
